# EUROPEAN PATENT APPLICATION

(11) **EP 1 983 506 A1**
(43) Date of publication of application: **22.10.2008**
(21) Application number: 07708021.6
(22) Date of filing: 05.02.2007
(51) Int. Cl.: G09G 3/36, G02F 1/133, G09G 3/20, G09G 3/34, H04N 5/66

(54) **LIQUID CRYSTAL DISPLAY DEVICE**

(30) Priority: 08.02.2006 JP 2006031722; 30.01.2007 JP 2007019519
(71) Applicant: Sharp Kabushiki Kaisha, Osaka-shi, Osaka 545-8522 (JP)
(72) Inventor: KOHASHIKAWA, Seiji, Suzuka-shi. MIE 513-854 (JP); SEKIGUCHI, Yuhya, Tsu-shi, MIE 514-0112 (JP); YAMAGUCHI, Yuhichiro, Yaita-shi, Tochigi 329-2141 (JP)
(74) Representative: Müller - Hoffmann & Partner
(86) International application number: PCT/JP2007/051903
(87) International publication number: WO 2007/091508

(57) **Abstract**

Provided is a liquid crystal display device capable of stopping the emitting luminance control of a backlight source on the APL of an input video signal in accordance with an input mode. The liquid crystal display device comprises a liquid crystal panel (7) for displaying a picture, a backlight source for irradiating the liquid crystal panel (7), and a luminance controlling portion (5) for controlling the light source. The luminance controlling portion (5) performs the emitting luminance control of the backlight source according to the featuring quantity of the input video signal, upon a backlight unit (8). In case an input mode (e.g., a PC input mode or a game input mode) to input a predetermined video signal other than the input mode to input a television video signal is selected, the luminance controlling portion (5) controls the backlight unit (8) so that the emitting luminance of the backlight source may be kept constant irrespective of the featuring quantity of the input video signal.

## Description

### TECHNICAL FIELD

The present invention relates to a liquid crystal display device, and, more particularly, to a liquid crystal display device that changes emission luminance of a backlight source depending on an input video signal.

### BACKGROUND OF THE INVENTION

For a liquid crystal display device including a liquid crystal panel that modulates light-source light in accordance with a video signal and a backlight source for applying light to the liquid crystal panel, technologies have been known that improve quality of displayed video by controlling the emission luminance of the backlight source depending on an input video signal.

For example, there are technologies such that an average picture level (hereinafter, APL) of one frame is calculated as a feature quantity of an input video signal to adjust the emission luminance of the backlight source in accordance with the APL, the emission luminance of the backlight source is adjusted based on the maximum luminance level and the minimum luminance level among luminance levels of pixels in one frame of the input video signal, the emission luminance of the backlight source is adjusted by analyzing histogram, etc., of the luminance levels of the input video signal.

For example, patent document 1 discloses a liquid crystal display device to improve a feeling of visual contrast while evading black floating interference, and provide videos of screen luminance optimum to an observer by reproducing glossy and high-quality videos. The liquid crystal display device disclosed in the patent document 1 detects APL of the input video signal and controls the luminance of the backlight source in accordance with the detected APL. A peak value of the input video signal is also detected and the control characteristics of the emission luminance of the backlight source are corrected in accordance with the peak value.

By the way, an ordinary liquid crystal television includes input modes for inputting and displaying various images such as personal computer (hereinafter, PC) images and game images, in addition to television images. These input modes are provided such that a viewer can select the modes. The patent document 2 discloses an image display device capable of realizing easy-to-see image display for both television images and computer images by variably controlling the emission luminance (emission intensity) of the backlight source in response to the mode switch setting between the mode for displaying television images and the mode for displaying computer images to obtain suitable screen luminance in each mode, and capable of reducing power consumption.
Patent Document 1: Japanese Laid-Open Patent Publication No. 2004-258669
Patent Document 2: Japanese Laid-Open Patent Publication No. 2006-11366

### DISCLOSURE OF THE INVENTION

### PROBLEMS TO BE SOLVED BY THE INVENTION

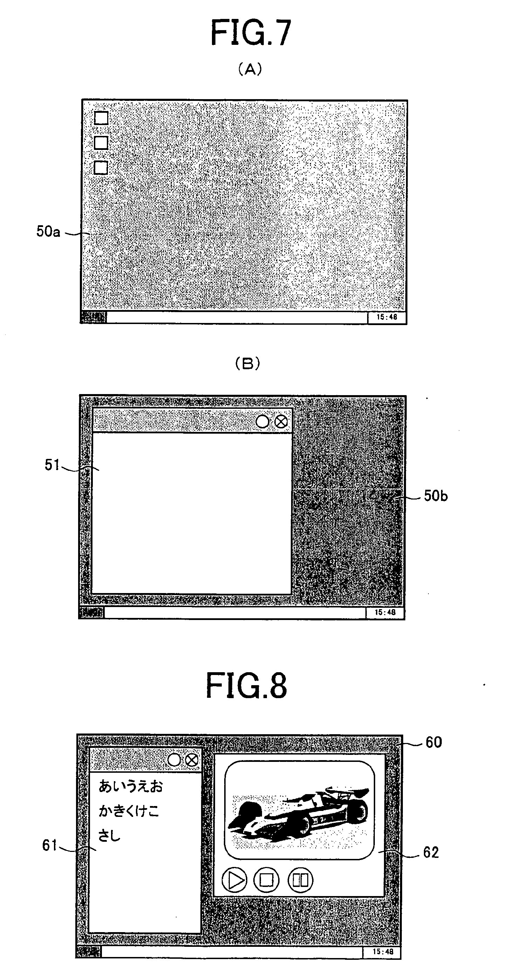

However, in the backlight-source luminance control depending on a feature quantity (such as APL) of a video signal in conventional technologies including patent document 1, viewers feel discomfort in some situations. For example, scenes exemplary illustrated in Figs. 7 to 10 may be cited.

For example, when an input mode of a liquid crystal display apparatus is set to a PC input mode and a background image 50a is displayed on a PC screen as shown in Fig. 7 (A), if a user activates an application, an application image (window) 51 is displayed in an overwriting manner on a background image 50b as shown in Fig. 7(B), and the APL of the entire screen is changed due to the display of the image 51. Since this leads to a change in the display luminance due to the backlight source luminance control in accordance with the APL of the input video signal, the display luminance is changed even though the background images 50a, 50b should essentially be displayed with the same luminance, and a viewer feels discomfort.

As exemplary illustrated in Fig. 8, when a PC is used to reproduce moving-image contents as shown by a reproduction video 62 with a moving-image player while displaying word-processor software for the user's work as shown by a word-processor image 61, the APL is changed depending on the reproduction video 62 that is a moving image and thereby, the backlight-source luminance is also changed, and this change causes the display luminance of the word-processor image 61 and a background image 60 to be changed and a viewer to feel discomfort.

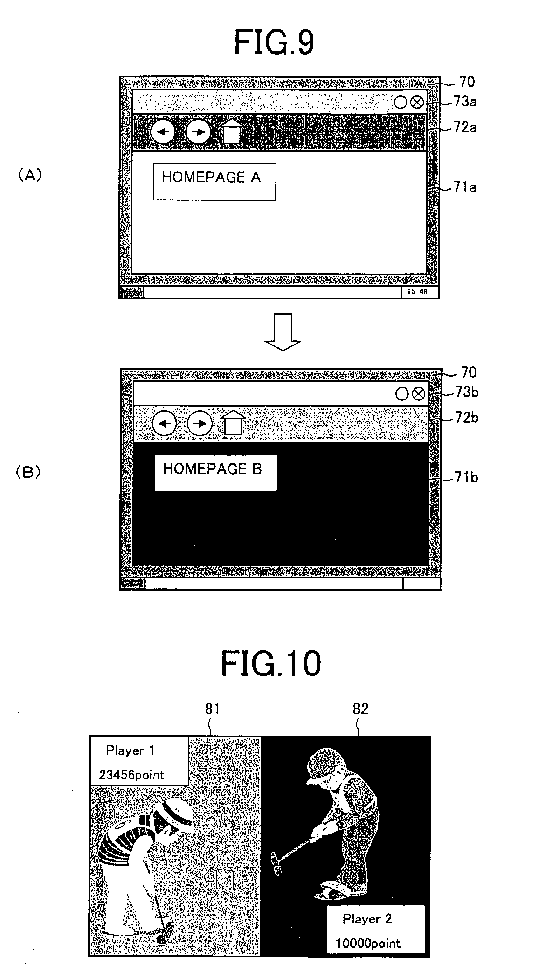

As exemplary illustrated in Fig. 9(A), a browser image 71a is displayed on a background image 70 while a viewer browses a homepage A, however, when the user goes to another site (homepage B) through a link click, etc., to display a browser image 71b as exemplary illustrated in Fig. 9(B), if the APL is different between the homepages A and B, the display luminance is changed due to the backlight source luminance control in accordance with the APL of the input video signal. Since the browser has a fixed part such as a toolbar, the display luminance is changed even though the toolbar images 72a, 72b in that part should essentially be displayed with the same luminance, and a viewer feels discomfort. A viewer also feels discomfort since the display luminance is similarly changed in menu-field images 73a, 73b.

The case of processing photographs or generating computer graphics (hereinafter, CG) with so-called photo-retouching software or paint software will then be considered. The APL is also changed when color and brightness of photographs are changed with software, and the display luminance is changed due to the backlight source luminance control in accordance with the APL of the input video signal. Since the brightness of photographs is further changed due to the variations in the display luminance, the photograph processing cannot correctly be performed. When generating CG, since the display luminance is changed in the middle of coloring, a desired picture cannot be created.

Other than the case of setting to the PC input mode like these four examples, viewers may feel discomfort in some situations. For example, in the case of a game input mode, especially when videos of a so-called battle-type game are displayed as exemplarily illustrated in Fig. 10, an image 81 of a player 1 and an image 82 of a player 2 may separately be displayed. Since variations of APL are not synchronized in the image 81 of the player 1 and the image 82 of the player 2 in this case, the video is not synchronized with variations in the display luminance due to the backlight source luminance control in accordance with the APL of the input video signal, and respective players feel discomfort.

When video signals mainly constituted by still images are displayed on the screen or when video signals mixing still images and moving images on the entire screen are displayed on the screen as in the case of the PC input mode and the game input mode, if the display luminance is adjusted through the backlight source luminance control in accordance with the APL of the input video signal, a viewer feels discomfort as a result. These problems are not disclosed or indicated in the conventional technologies not implementing the backlight source luminance control in accordance with the APL of the input video signal including patent document 2.

The present invention was conceived in view of the above situations and it is therefore the object of the present invention to provide a liquid crystal display device capable of suspending the backlight source luminance control for the feature quantity of the input video signal depending on the input modes.

### MEANS FOR SOLVING THE PROBLEMS

In order to solve the above problems, a first technical means of the present invention is a liquid crystal display device comprising a liquid crystal panel that displays video and a light source that illuminates the liquid crystal panel, and variably controlling emission luminance of the light source depending on a feature quantity of an input video signal, wherein in case an input mode of inputting a predetermined video signal is selected other than an input mode of inputting a television video signal, the emission luminance of the light source is held constant regardless of the feature quantity of the input video signal.

A second technical means of the present invention is a liquid crystal display device comprising a liquid crystal panel that displays video and a light source that illuminates the liquid crystal panel, and variably controlling emission luminance of the light source depending on a feature quantity of an input video signal, wherein in case an input mode of inputting a predetermined video signal is selected other than an input mode of inputting a television video signal, a processing of variably controlling the emission luminance of the light source depending on the feature quantity of the input video signal is suspended.

A third technical means of the present invention is the liquid crystal display device as defined in the first or the second technical means, wherein the input mode of inputting the predetermined video signal is an input mode of inputting a computer video signal.

A fourth technical means of the present invention is the liquid crystal display device as defined in the first or the second technical means, wherein the input mode of inputting the predetermined video signal is an input mode of inputting a game video signal.

A fifth technical means of the present invention is the liquid crystal display device as defined in the first or the second technical means, wherein the input mode of inputting the predetermined video signal is an input mode of inputting an electronic book video signal.

### EFFECT OF THE INVENTION

According to the present invention, since the backlight source luminance control for the feature quantity of the input video signal can be suspended depending on the input modes and the display luminance can be made constant if variations of the display luminance give bad effects on the display quality, viewers can be prevented from feeling discomfort.

### BRIEF DESCRIPTION OF THE DRAWINGS

[Fig. 1] Fig. 1 is an outline block diagram for explaining a configuration of one embodiment of a liquid crystal display device according to the present invention.
[Fig. 2] Fig. 2 is a block diagram for explaining a configuration of another embodiment of the liquid crystal display device according to the present invention.
[Fig. 3] Fig. 3 is a view of an exemplary configuration of a backlight unit applicable to the liquid crystal display device of the present invention.
[Fig. 4] Fig. 4 is a view of another exemplary configuration of the backlight unit applicable to the liquid crystal display device of the present invention.
[Fig. 5] Fig. 5 is a view of an example of backlight luminance control characteristics using a luminance control table applied at the time of execution of the backlight source luminance control for the feature quantity of the video signal.
[Fig. 6] Fig. 6 is a view of an example of backlight luminance control characteristics using a fixed value applied at the time of suspension of the backlight source luminance control for the feature quantity of the video signal.
[Fig. 7] Fig. 7 is a view for explaining an example of situations when a viewer feels discomfort due to the backlight source luminance control for the feature quantity of the video signal in accordance with APL of video signals in conventional technologies.
[Fig. 8] Fig. 8 is a view for explaining another example of situations when a viewer feels discomfort due to the backlight source luminance control for the feature quantity of the video signal in accordance with APL of video signals in conventional technologies.
[Fig. 9] Fig. 9 is a view for explaining another example of situations when a viewer feels discomfort due to the backlight source luminance control for the feature quantity of the video signal in accordance with APL of video signals in conventional technologies.
[Fig. 10] Fig. 10 is a view for explaining another example of situations when a viewer feels discomfort due to the backlight source luminance control for the feature quantity of the video signal in accordance with APL of video signals in conventional technologies.

### EXPLANATIONS OF REFERENCE NUMERALS

1 ... liquid crystal display device; 2...selector; 3...input mode controlling portion; 4...video adjusting portion; 5...luminance controlling portion; 6...liquid crystal (LCD) controller; 7...liquid crystal displaying portion (liquid crystal panel); 8...backlight unit; 11..APL measuring portion; 12...filter; 13...backlight controlling portion; 14...microcomputer; 15...luminance control table; 16...table storage memory; 30...housing; 31...fluorescent tube; 32...diffusion plate; 41...red light source; 42...green light source; and 43...blue light source.

### PREFERRED EMBODIMENTS OF THE INVENTION

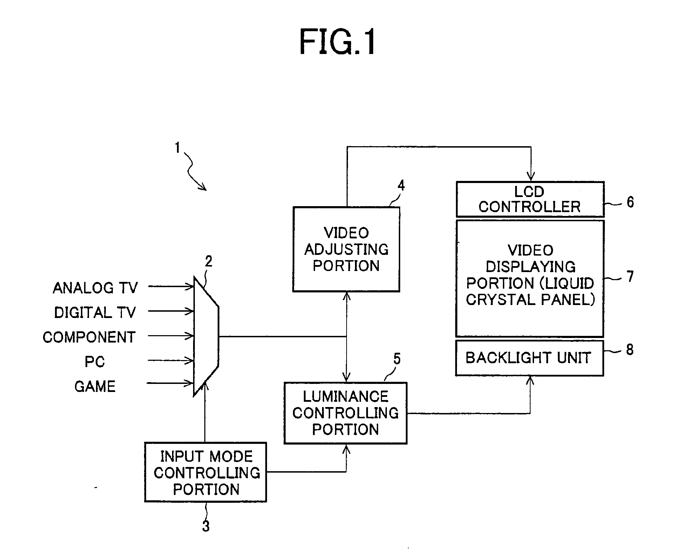

Fig. 1 is an outline block diagram for explaining a configuration of one embodiment of a liquid crystal display device according to the present invention and in Fig. 1, a reference numeral 1 denotes a liquid crystal display device. The liquid crystal display device 1 includes a selector 2, an input mode controlling portion 3, a video adjusting portion 4, a liquid crystal (LCD) controller 6, a liquid crystal displaying portion (liquid crystal panel) 7, a light source (not shown), and a backlight unit 8. The liquid crystal display device 1 according to the present invention is mainly characterized by including a backlight-source luminance controlling portion 5.

The selector 2 inputs a plurality of video signals including television video signals (video signals) such as an analog television (TV) signal, a digital television (TV) signal, and a component signals, and PC video signals and game video signals, selects and switches the signal to be displayed according to the input mode specified by the input mode controlling portion 3, and outputs the signal to the video adjusting portion 4 and the backlight-source luminance controlling portion 5. The input mode controlling portion 3 accepts user operations, etc., instructs the selector to switch the input modes, and sends the current input mode to the backlight-source luminance controlling portion 5.

The television video signals (video signals) include video signals not only from built-in analog TV tuner and digital TV tuner but also from devices connected to external input terminals such as a video input terminal and a component input terminal. The PC video signals are video signals from a PC connected to a PC input terminal (PC connection terminal), and the game video signals are video signals from a game device connected to a game input terminal (game connection terminal). The input modes correspond to differences among video-signal input sources as above. Therefore, when a viewer selects an input source that outputs the video signal desired to be displayed on the liquid crystal panel 7 from a plurality of input sources, this has the same meaning as that the viewer selects a so-called input mode of the present invention.

The backlight-source luminance controlling portion 5 detects a feature quantity (such as APL) of the input video signal acquired from the selector 2 and outputs to the backlight unit 8 an emission luminance control signal for controlling the backlight-source emission luminance in accordance with the feature quantity.

If it is determined that the notification from the input mode controlling portion 3 indicates the TV video input mode of inputting the television video signals (video signals), the backlight-source luminance controlling portion 5 executes the backlight-source luminance control for the feature quantity of the video signal.

On the other hand, if the notification from the input mode controlling portion 3 indicates that an input mode of inputting a predetermined video signal other than the TV video input mode is selected, the backlight-source luminance controlling portion 5 controls the backlight unit 8 such that the emission luminance of the backlight source is held constant regardless of the feature quantity of the input video signal. By way of example, in the case of the PC input mode or the game input mode, the backlight-source luminance controlling portion 5 suspends the backlight-source luminance control for the feature quantity of the video signal by not transmitting the emission luminance control signal to the backlight unit 8 or by transmitting the emission luminance control signal giving an instruction to suspend the backlight-source luminance control for the feature quantity of the video signal.

As above, the backlight-source luminance controlling portion 5 of the present invention executes (turns on) /suspends (turns off) the backlight-source luminance control for the feature quantity of the video signal in accordance with the information of the current input mode transmitted from the input mode controlling portion 3. To perform this control of the backlight-source luminance controlling portion 5, at least one television video signal (video signal) and at least one video signal other than the television video signal (video signal) may be configured to be input to the selector 2.

A term "constant" as used herein is intended to include variation of ±1 %, which is considered as a range where a viewer cannot realize a change if luminance is changed in accordance with the Webber's Law. That is, if the emission luminance of the backlight source is 10000 cd/m² (candela/square meter), variations of the emission luminance of the backlight source is intended to be held within 9900 to 10100 cd/m².

The video adjusting portion 4 applies various video processing to the video signal output from the selector 2 to adjust video and sends the signal to the LCD controller 6. The LCD controller 6 controls the liquid crystal panel 7 based on the adjusted video signal received from the video adjusting portion 4. The liquid crystal panel 7 is a panel that displays videos based on the control of the LCD controller 6. The backlight unit 8 applies light to the liquid crystal panel 7 in accordance with the emission luminance control signal transmitted from the backlight-source luminance controlling portion 5, and microcomputer, etc., not shown.

To the input mode of inputting a predetermined video signal, a viewer can be prevented from feeling discomfort shown in the conventional technologies by applying an input mode of inputting computer video signals (PC input mode), or an input mode of inputting game video signals (game input mode), or both of these input modes, for example. To the input mode of inputting a predetermined video signal, various other input modes can be applied such as an input mode of inputting electronic book video signals from an external storage medium such as a memory card (electronic book input mode).

Actually, in the PC input mode, the game input mode, and the electronic book input mode, (1) since the video displayed on the liquid crystal panel 7 mainly constituted by still images and the effect of the backlight source luminance control for the feature quantity of the video signal is reduced in any video, and (2) since a still image and a moving image are frequently mixed in the entire screen and a viewer feels discomfort because the display luminance is changed due to the backlight source luminance control for the feature quantity of the video signal even in the normally unchanged still image part along with the moving image part, the backlight-source luminance controlling portion 5 suspends the backlight source luminance control for the feature quantity of the video signal. As described later, although the emission luminance of the backlight source is held constant regardless of the video feature quantity when the backlight source luminance control for the feature quantity of the video signal is suspended in the present invention, the changes in the emission luminance due to factors other than the video feature quantity (e.g., a brightness sensor and user operations) are not suspended even when the backlight source luminance control for the feature quantity of the video signal is suspended.

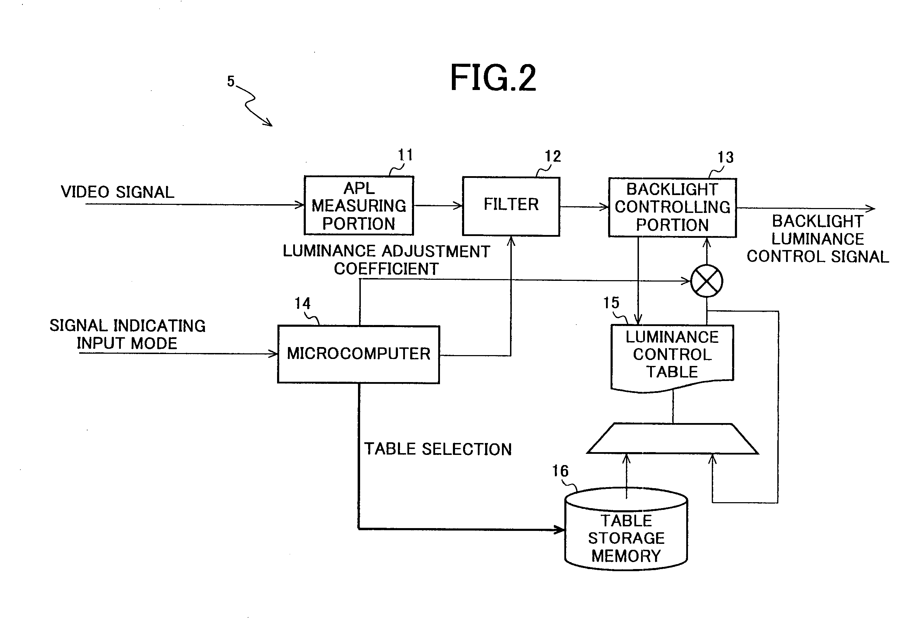

Fig. 2 is a block diagram of the inside of the luminance controlling portion, and the input video signal is output to an APL measuring portion 11. The APL measuring portion 11 measures APL for each frame of the input video signal. The measured APL is sent to a filter 12. The APL corresponds to one of the video feature quantities of the present invention and the emission luminance of the backlight source is controlled depending on the APL based on luminance control characteristics of a luminance control table 15.

Although the APL is measured in the video signal output from the selector 2 in the example shown in Figs. 1 and 2, the APL may be measured after the video processing of the video adjusting portion 4. However, the video adjusting portion 4 may execute the processing of displaying OSD (on-screen display), the scaling processing, or the processing of letter box display (limitation of a screen area by black masks etc.), for example. If the APL is measured in the video signal output from the selector 2 (i.e., without the video processing by the video adjusting portion 4), the emission luminance of the backlight source can be controlled correspondingly to the feature quantity of the input video signal without the effect of the video processing by the video adjusting portion 4. Therefore, it is more preferable to measure the APL from the video signal before the video processing as shown in Figs. 1 and 2.

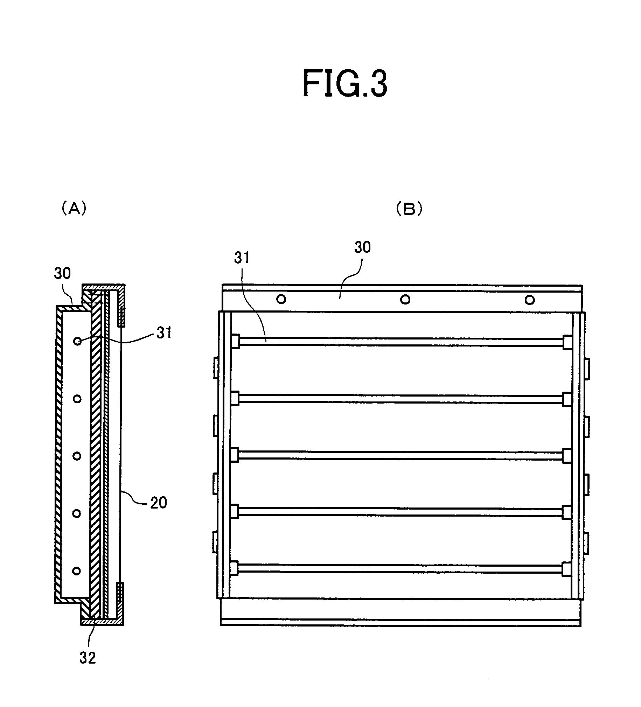

For example, as shown in Fig. 3, the backlight unit 8 shown in Fig. 1 is configured by disposing a plurality of narrow-tube-shaped fluorescent tubes 31 at even intervals within a housing 30 attached to the backside of the liquid crystal panel 20. A diffusion plate 32 equally diffuses the illumination light emitted from the fluorescent tubes 31.

In this case, for example, the backlight unit 8 includes a light modulation control circuit that outputs a light modulation signal, which is pulse-width modulation output having a signal period ratio (duty) of rectangular-wave high-voltage and low-voltage levels changed in accordance with the backlight luminance adjustment signal input from a backlight controlling portion 13 of the luminance controlling portion, and an inverter that receives the light modulation signal from the light modulation control circuit to generate an alternating voltage having frequency and voltage corresponding to the light modulation signal and applies the alternating voltage to the fluorescent tubes 31 to drive the fluorescent tubes 31 to emit light (both not shown). The inverter is operated when the output of the above light modulation control circuit is at a high-voltage level and is terminated when the output is at a low-voltage level, and the luminance of the light source is adjusted through this intermittent operation depending on the output duty of the light modulation control circuit.

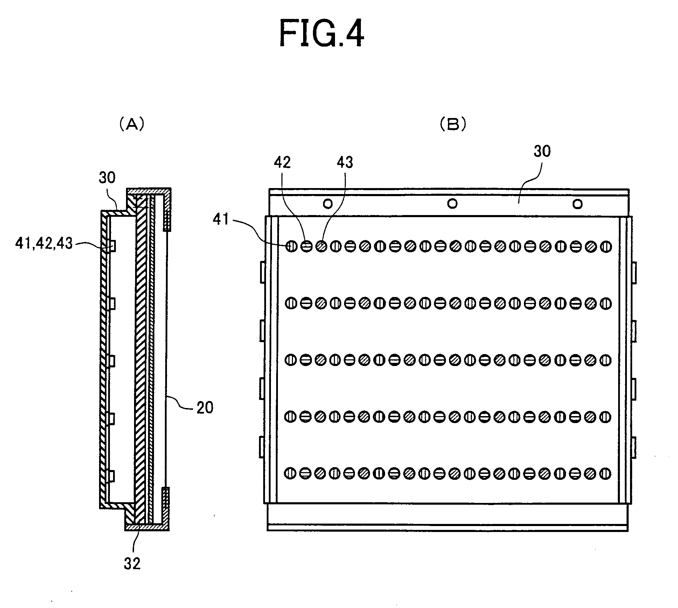

Alternatively, as shown in Fig. 4, the backlight unit 8 may be configured by disposing LED light sources with a plurality of colors composed of three primary colors of red, green, and blue, i.e., a red light source 41, a green light source 42, and a blue light source 43 within the housing 30 attached to the backside of the liquid crystal panel 20. The emission luminance of the LED light sources may be controlled by LED currents to the respective LED light sources. Although not shown, something that uses the above fluorescent tubes and the LEDs together is applicable as the backlight unit 8. The light may also be applied to the liquid crystal panel 20 through a so-called side-edge type configuration, which equalizes the light from the light sources such as the fluorescent tubes and the LEDs on a surface with the use of an optical waveguide.

When the backlight source emission luminance is controlled depending on the measurement value of the APL, the filter 12 of Fig. 2 regulates the follow-up ability for changes in the APL between frames and is made up of a multistage digital filter, for example.

The filter 12 inputs the APL per frame measured by the APL measuring portion 11 and calculates an output APL by performing a weighted average calculation for each frame with the APL of past one or a plurality of frames in accordance with the weightings thereof. The number of past frame stages reflected in the current frame can variably be set here and the weightings are set for the current frame and the past frames (of the set number of stages), respectively. The weighted average is obtained and output for the APL of the current frame and the APL of the delayed frames of the number of used stages in accordance with the respective weightings. This enables the follow-up ability to be set appropriately for the output APL following the actual changes in the APL.

The APL output from the filter 21 is input to the backlight controlling portion 13. The backlight controlling portion 13 outputs a backlight luminance control signal for adjusting the backlight source emission luminance depending on the input APL based on the luminance control table (look-up table) 15 to be used. As described above, the backlight source emission luminance is controlled in accordance with the backlight luminance control signal output from the backlight controlling portion 13.

The luminance control table 15 defines a relation of the emission luminance of the backlight source depending on the video feature quantity (in this case, APL) of each frame of the input video signal. In this example, the luminance control table 15 is preliminarily stored in the table storage memory 16 such as a ROM.

At the time of execution of the backlight-source luminance control for the feature quantity of the video signal, the luminance control table 15 to be used is read depending on the APL detected from the input video signal to be displayed to control the emission luminance of the backlight source of the backlight unit 8. This reduces the power consumption of the backlight while maintaining the display quality (such as luminance, contrast, and sharpness) of the displayed video. On the other hand, at the time of suspension of the backlight-source luminance control for the feature quantity of the video signal, the emission luminance of the backlight source of the backlight unit 8 is controlled such that the emission luminance is always constant regardless of the APL detected from the input video signal to be displayed. Therefore, in the case of the input modes that gives discomfort to a viewer when executing the backlight-source luminance control for the feature quantity of the video signal, the backlight-source luminance control for the feature quantity of the video signal may be suspended to maintain the display quality of the displayed video. If the backlight-source luminance control for the feature quantity of the video signal is suspended, a fixed luminance control value stored in a microcomputer 14 or the table storage memory 16 is used, for example.

The signal indicating the input mode is output from the input mode controlling portion 3 of Fig. 1 and input to the microcomputer 14, and the microcomputer 14 controls the execution/suspension of the backlight-source luminance control for the feature quantity of the video signal based on the input signal indicating the input mode.

If it is determined that the TV video input mode of inputting the television video signals (video signals) is indicated, the microcomputer 14 executes the backlight-source luminance control for the feature quantity of the video signal. On the other hand, if it is determined that the PC input mode or the game input mode other than the TV video input mode of inputting the television video signals (video signals) is selected, the microcomputer 14 suspends the backlight-source luminance control for the feature quantity of the video signal and executes the processing such that the emission luminance of the backlight source is held constant regardless of the feature quantity of the input video signal.

To the input mode that should cause the suspension of the backlight-source luminance control for the feature quantity of the video signal, an input mode of inputting a video signal including almost still images such as the electronic book input mode is applicable in addition to the above PC input mode and game input mode. In this example, the changes in the light-source emission luminance due to factors other than the video feature quantity (e.g., a brightness sensor and user operations) are not suspended even when the backlight source luminance control for the feature quantity of the video signal is suspended.

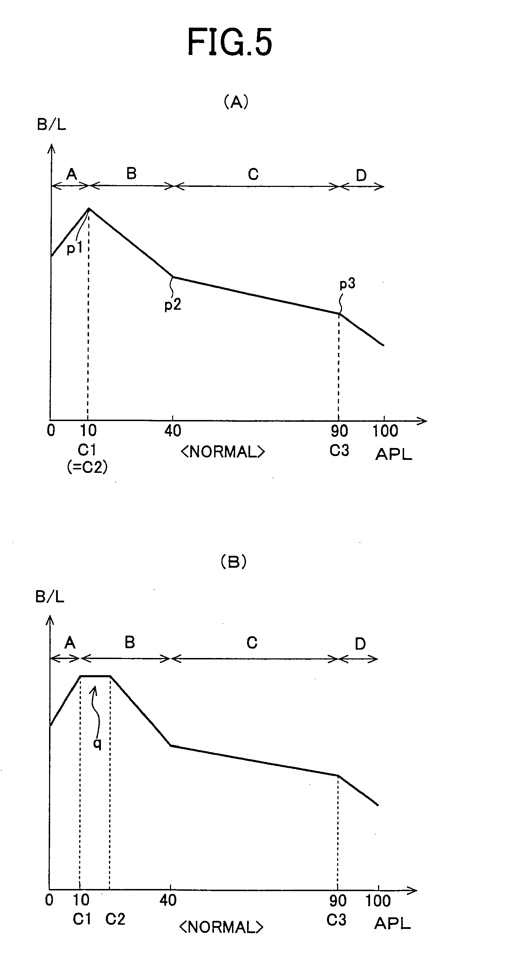

Fig. 5 is a view of an example of backlight luminance control characteristics using a luminance control table applied at the time of execution of the backlight source luminance control for the feature quantity of the video signal. In Fig. 5, the horizontal axis indicates the APL in percentage, and if the entire screen of the displayed video is black, the APL is 0 %, and if the screen is entirely white, the APL is 100 %. The vertical axis indicates an emission luminance ratio of the backlight source, which is 100 % when the backlight source emission luminance is maximized and 0 % when the backlight light source is turned off.

The luminance control characteristics shown in Figs. 5(A), (B) represent that the backlight-source luminance control characteristics are changed in accordance with a signal area with low APL indicated by A, signal areas with intermediate-level APL indicated by B and C, and a signal area with high APL indicated by D. It is defined here that a characteristic change point is a change point of the slope of the backlight source luminance control for the feature quantity (in this example, APL) of the video signal. In Fig. 5 (A), the characteristic change points are intersection points p1, p2, and p3 of lines of the four area A to D.

In an implementation of the present invention, the characteristic change point p1 located closer to the lowest APL of the luminance control characteristics is set to the position of 10% APL, and the characteristic change point p3 located closer to the highest APL is set to the position of 90% APL. The characteristic change point p2 is set to the position of 40% APL. The characteristic change point p1 with the 10% APL is defined as the characteristic change point having the maximum emission luminance of the backlight source.

As above, the embodiment according to the present invention is characterized in that the backlight source emission luminance is held low in the signal area with the extremely low video feature quantity and the signal area with the extremely low video feature quantity as above to reduce power consumption while maintaining the image quality. As long as such characteristics are satisfied, the luminance control characteristics are not limited to the above example. For example, as shown in Fig. 5(B), a signal are q having a constant emission luminance value of the backlight source may exist in a signal area with the APL greater than that at the characteristic change point p1 closer to the lowest APL.

The luminance control characteristics may be not only the linear characteristics as above but also nonlinear characteristics. If the luminance control characteristics are nonlinear, the nonlinear luminance control characteristics can be approximated by linear luminance control characteristics, and the backlight source luminance control can be regulated as is the case with the above described linear luminance control characteristics by assuming the characteristic change point in the approximate linear luminance control characteristics. The light source emission luminance may be controlled with the use of characteristics reducing the backlight source emission luminance as the APL becomes lower and the amplitude of the video signal may be increased to improve the contrast while constraining the black floating.

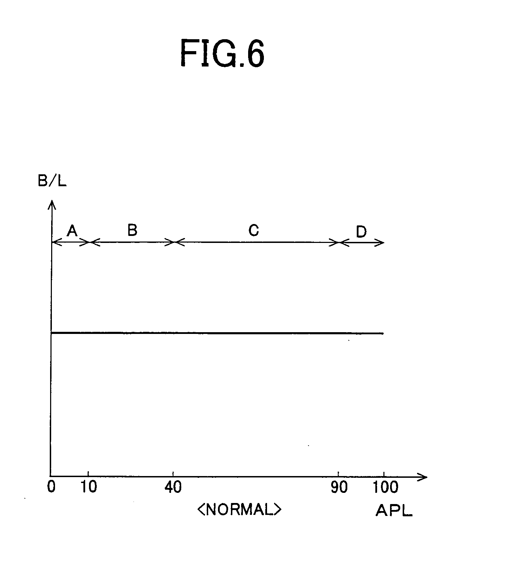

Fig. 6 is a view of an example of backlight luminance control characteristics using a fixed value that is applied at the time of suspension of the backlight source luminance control for the feature quantity of the video signal. The graph of Fig. 6 is plotted in the same way as Fig. 5. At the time of suspension of the backlight source luminance control for the feature quantity of the video signal, a fixed value is used for the luminance control and, therefore, the luminance control characteristics entirely have the same level for the areas A to D of Fig. 5. The backlight source luminance control for the feature quantity of the video signal is suspended by keeping the same level regardless of the values of the APL.

Although the present invention has been exemplarily illustrated with reference to the drawings and the APL is used as a video feature quantity of the input video signal to control the backlight emission luminance depending on the APL in the above examples, the video feature quantity is not limited to the APL and, for example, a state of peak luminance (presence or degree) in one frame of the input video signal may be utilized.

Alternatively, the maximum and minimum luminance levels and the luminance distribution status (histogram) in a predetermined area (period) of one frame may be used for the video feature quantity of the input video signal, or the back light emission luminance may variably be controlled based on a video feature quantity obtained from a combination thereof.

To perform the backlight source luminance control for the feature quantity of the video signal with the use of the APL, an average value does not have to be obtained from the luminance levels of all the video signals of one frame to obtain the APL and, for example, an average value may be obtained from the luminance levels of video signals near the center of the displayed video excluding its edge portions to use for the video feature quantity. For example, based on genre information separated/acquired from broadcast reception signals, the gate control may be performed such that a preset screen area (likely to be overlapped with characters/symbols, etc.) is excluded to measure the video feature quantity only in a predetermined part of an area.

The above luminance conversion control is applicable not only to a direct-view liquid crystal displaying device including the backlight unit as shown in Fig. 3 or 4 but also to a projection type displaying device such as a liquid crystal projector. In this case, the video display is performed by applying the light-source light from the backside of the liquid crystal panel and the emission luminance of the light-source light may be controlled in accordance with the above luminance control characteristics.

## Claims

1. A liquid crystal display device comprising a liquid crystal panel that displays video and a light source that illuminates the liquid crystal panel, and variably controlling emission luminance of the light source depending on a feature quantity of an input video signal, wherein
in case an input mode of inputting a predetermined video signal is selected other than an input mode of inputting a television video signal, the emission luminance of the light source is held constant regardless of the feature quantity of the input video signal.

2. A liquid crystal display device comprising a liquid crystal panel that displays video and a light source that illuminates the liquid crystal panel, and variably controlling emission luminance of the light source depending on a feature quantity of an input video signal, wherein
in case an input mode of inputting a predetermined video signal is selected other than an input mode of inputting a television video signal, a processing of variably controlling the emission luminance of the light source depending on the feature quantity of the input video signal is suspended.

3. The liquid crystal display device as defined in claim 1 or 2, wherein the input mode of inputting the predetermined video signal is an input mode of inputting a computer video signal.

4. The liquid crystal display device as defined in claim 1 or 2, wherein the input mode of inputting the predetermined video signal is an input mode of inputting a game video signal.

5. The liquid crystal display device as defined in claim 1 or 2, wherein the input mode of inputting the predetermined video signal is an input mode of inputting an electronic book video signal.
